# EUROPÄISCHE PATENTANMELDUNG

(11) **EP 1 278 208 A1**
(43) Veröffentlichungstag der Anmeldung: **22.01.2003**
(21) Anmeldenummer: 02010797.5
(22) Anmeldetag: 15.05.2002
(51) Int. Cl.: G21K 1/06, G02B 5/08

(54) **Einrichtung zur Reflektion von Röntgenstrahlen**

(30) Priorität: 18.07.2001 DE 10134267
(71) Anmelder: GKSS-FORSCHUNGSZENTRUM GEESTHACHT GMBH, 21502 Geesthacht (DE)
(72) Erfinder: Michaelsen, Carsten, Dr., 21502 Geesthacht (DE); Bormann, Rüdiger, Prof., 21224 Rosengarten (DE); Störmer, Michael, Dr., 21029 Hamburg (DE)
(74) Vertreter: Niedmers, Ole, Dipl.-Phys.

(57) **Zusammenfassung**

Es wird eine Einrichtung zur Reflektion von Röntgenstrahlen, umfassend wenigstens ein röntgenstrahlenreflektierendes Element, vorgeschlagen. Dabei wird auf dem Element eine korrosionsbeständige Schicht angeordnet, wobei diese Ausgestaltung eine erste Lösung ist. Gem. einer zweiten Lösung weist das Element einen Zusatz auf, der dem Element eine Korrosionsbeständigkeit verleiht.

## Beschreibung

Die Erfindung betrifft eine Einrichtung zur Reflektion von Röntgenstrahlen, umfassend wenigstens ein röntgenstrahlreflektierendes Element.

Einrichtungen zur Reflektion von Röntgenstrahlen, vielfach Röntgenreflektoren genannt, werden seit vielen Jahren in den verschiedensten wissenschaftlichen, technischen und praktischen Bereichen eingesetzt, und zwar zur Umlenkung und/oder Monochromatisierung von Röntgenstrahlen. Bestimmte Röntgenreflektoren dienen zudem auch noch zusätzlich der Verbesserung der Effektivität von Röntgengeräten schlechthin. Einrichtungen zur Reflektion von Röntgenstrahlen basieren auf Kristallen, Totalreflektoren sowie Vielfachschichten, letztere werden. wie schon erwähnt, insbesondere zur Monochromatisierung von Röntgenstrahlen eingesetzt.

Während der Anwendung der Einrichtungen zur Reflektion von Röntgenstrahlen wurde beobachtet, daß sie in Kontakt mit korrosiven Medien, bspw. Luft, Feuchtigkeit und Industrieabgasen, dazu neigen, zu korrodieren. So wurde beobachtet, daß innerhalb weniger Tage oder Wochen bei intensiver Röntgenbestrahlung der Einrichtungen ein vollständiger Verlust ihrer Reflektivität bis hin zur Zerstörung des Reflektors die Folge war.

Als Ursache der Korrosion an der Einrichtung war erkannt worden, daß Luftmoleküle im die Einrichtung umgebenden Medium unter Einfluß der Röntgenstrahlung ionisiert werden und sich bspw. Ozon sowie elementarer Sauerstoff bilden. Dieser Sauerstoff oxidiert die Oberfläche des röntgenstrahlenreflektierenden Elements in aggressiver und stark beschleunigter Weise. Dabei verbindet sich der Sauerstoff mit dem elementbildenden Werkstoff des Reflektors und bildet Oxidinseln. Hierbei entstehen Risse. Die derart kontaminierte Oberfläche des Elements wird mit der Zeit derart rauh, daß man die Rauhigkeit sogar mit bloßem Auge erkennen kann. Gleichzeitig nimmt mit der Zunahme der Rauhigkeit die Röntgenreflektivität des Elements ab. Die Oxidinseln verlieren schließlich ihre Haftung zum eigentlichen röntgenstrahlenreflektierenden Element und reißen ab. Die Folge ist eine Zerstörung des röntgenreflektierenden Elements bis hin zur vollständigen Auflösung der röntgenoptisch aktiven Oberfläche des Elements. Unter anderen korrosiven Bedingungen sind auch andere Schädigungsmechanismen des röntgenstrahlenreflektierenden Elementes beobachtet worden.

Es ist somit Aufgabe der vorliegenden Erfindung, eine Einrichtung zur Reflektion von Röntgenstrahlen der eingangs genannten Art zu schaffen, die in umgebenden korrosiven Medien in bezug auf ihr röntgenstrahlenreflektierendes Element dennoch fortlaufend korrosionsfrei bleibt, so daß das Reflektionsvermögen des röntgenstrahlenreflektierenden Elements auch bei intensiver Beaufschlagung mit Röntgenstrahlen über lange Zeiträume faktisch korrosionsfrei und damit voll funktionsfähig bleibt, wobei die Einrichtung nur unwesentlich kostenträchtiger herstellbar und bereitstellbar stein soll als bisherige konventionelle Einrichtungen zur Reflektion von Röntgenstrahlen.

Gelöst wird die Aufgabe gem. der Erfindung dadurch, daß auf dem Element eine korrosionsbeständige Schicht angeordnet ist.

Der Vorteil der erfindungsgemäßen Einrichtung ist der, daß diese durch die erfindungsgemäß vorgeschlagene Maßnahme auf einfache Weise korrosionsbeständig ausgebildet werden kann und, wie ebenfalls angestrebt, keinerlei apparative Veränderungen der Röntgenanlagen erforderlich sind, bei denen die erfindungsgemäßen Einrichtungen eingesetzt werden. Die erfindungsgemäß vorgeschlagene Lösung hat zudem den Vorteil, daß sie nicht nur anwendbar auf neu hergestellte Einrichtungen ist, sondern auch schon bestehende Einrichtungen derart nach- bzw. ausgerüstet werden können. Die korrosionsbeständige Schicht auf die Oberfläche des röntgenstrahlreflektierenden Elements aufzubringen, kann bspw. auf einfache Weise mittels an sich bekannter Beschichtungstechniken, dem PVD-Verfahren oder dem CVD-Verfahren erfolgen, wobei sich insbesondere diese Verfahren auch zur nachträglichen Beschichtung des röntgenstrahlenreflektierenden Elements mit der korrosionsbeständigen Schicht eignen.

Gem. einer vorteilhaften Ausgestaltung der Einrichtung ist die korrosionsbeständige Schicht amorph ausgebildet, was den Vorteil hat, daß keine Korngrenzen als mögliche Reaktionspfade vorhanden sind und die amorphe Schicht sollte vorzugsweise eine geschlossene Schicht bilden.

Um die Röntgeneigenschaften der röntgenreflektierenden Schicht so gering wie möglich zu beeinflussen, ist es vorteilhaft, daß die korrosionsbeständige Schicht eine geringe Dichte aufweist, d.h. die röntgenoptischen Eigenschaft der korrosionsbeständigen Schicht sich durch eine geringe Absorption auszeichnet.

Vorzugsweise liegt die Dicke der korrosionsbeständigen Schicht im wesentlichen im Bereich zwischen 1 und 10³ nm. Insbesondere vorteilhaft ist dabei eine Schichtdicke der korrosionsbeständigen Schicht im Bereich von 5 bis 50 nm, wobei die Wahl der Dicke der korrosionsbeständigen Schicht direkt auch in die Röntgeneigenschaften des röntgenstrahlreflektierenden Elements eingeht.

Als besonders vorteilhaft haben sich solche korrosionsbeständigen Schichten herausgestellt, die aus einem Metalloxid bestehen, wobei die Schicht thermodynamisch extrem stabil sein soll, so daß eine Reaktion mit dem die Einrichtung umgebenden korrosiven Medium weiter unterdrückt ist.

Als Metalloxid hat sich als sehr vorteilhaft auch Aluminiumoxid herausgestellt, das zudem leicht mittels des oben beschriebenen PVD-Verfahrens auf das röntgenstrahlreflektierende Element aufbringen läßt.

Ein anderer Weg zur Lösung der oben beschriebenen Aufgabe ist dadurch gekennzeichnet, daß auf das röntgenstrahlreflektierende Element keine gesonderte korrosionsbeständige Schicht aufgebracht wird, vielmehr das Element einen Zusatz aufweist, der dem röntgenstrahlreflektierenden Element selbst eine Korrosionsbeständigkeit verleiht.

Der Vorteil dieser Lösung liegt darin, daß im Zuge des Herstellungsverfahrens bzw. der Herstellung des röntgenstrahlreflektierenden Elements die Korrosionsbeständigkeit des Elements gewissermaßen in dieses selbst eingebaut werden kann.

Dieses kann auf unterschiedliche Weise geschehen. Zum einen kann das Element und der Zusatz vorzugsweise eine Legierung bilden, zum anderen kann das Element und der Zusatz ein Gemisch bilden.

Als Legierungskomponenten eignen sich insbesondere Alund/oder Cr-haltige Legierungskomponenten, die gegen eine Oxidation besonders wirksam sind, da sie beim Umgebungsmedium Luft von selbst passivierende Oxide bilden.

Vorzugsweise können auch als Legierungskomponenten Ni-Cu-, Ni-Cr- oder Ni-Cr-Al-Y-Legierungskomponenten eingesetzt werden, wobei man sich zu Nutze macht, daß Einrichtungen zur Reflektion von Röntgenstrahlen vielfach derartige röntgenstrahlenreflektierende Elemente aufweisen, die Nickel verwenden, wobei gem. dieser vorteilhaften Lösung das Element Nickel durch die erwähnten korrosionsbeständigen Nickel-Legierungen ersetzt werden und wobei sich gezeigt hat, daß die Röntgenreflektionseigenschaften sich dadurch nicht signifikant verschlechtern.

Schließlich ist es auch möglich, beide Lösungen miteinander zu kombinieren, d.h. auf das röntgenstrahlreflektierende Element, das als Gemisch oder Legierung einen Zusatz aufweist, eine weitere korrosionsbeständige Schicht anzuordnen.

## Patentansprüche

1. Einrichtung zur Reflektion von Röntgenstrahlen, umfassend wenigstens ein röntgenstrahlreflektierendes Element, **dadurch gekennzeichnet, daß** auf dem Element eine korrosionsbeständige Schicht angeordnet ist.

2. Einrichtung nach Anspruch 1, **dadurch gekennzeichnet, daß** die korrosionsbeständige Schicht amorph ausgebildet ist.

3. Einrichtung nach einem oder beiden der Ansprüche 1 oder 2, **dadurch gekennzeichnet, daß** die korrosionsbeständige Schicht eine geringe Dichte aufweist.

4. Einrichtung nach einem oder mehreren der Ansprüche 1 bis 3, **dadurch gekennzeichnet, daß** die Dicke der korrosionsbeständigen Schicht im wesentlichen im Bereich zwischen 1 und 10³nm liegt.

5. Einrichtung nach einem oder mehreren der Ansprüche 1 bis 4, **dadurch gekennzeichnet, daß** die korrosionsbeständige Schicht aus einem Metalloxid besteht.

6. Einrichtung nach Anspruch 5, **dadurch gekennzeichnet, daß** das Metalloxid Aluminiumoxid ist.

7. Einrichtung zur Reflektion von Röntgenstrahlen, umfassend wenigstens ein röntgenstrahlenreflektierendes Element, **dadurch gekennzeichnet, daß** das Element einen Zusatz aufweist, der dem Element eine Korrosionsbeständigkeit verleiht.

8. Einrichtung nach Anspruch 7, **dadurch gekennzeichnet, daß** das Element unter Zusatz eine Legierung bilden.

9. Einrichtung nach Anspruch 8, **dadurch gekennzeichnet, daß** die Legierung eine Al- und/oder Cr-haltige Legierung ist.

10. Einrichtung nach Anspruch 8, **dadurch gekennzeichnet, daß** die Legierung eine Ni-Cu-, eine Ni-Cr- oder eine Ni-Cr-Al-Y-Legierung ist.
